# EUROPÄISCHE PATENTSCHRIFT

(11) **EP 1 237 645 B1**
(45) Veröffentlichungstag und Bekanntmachung des Hinweises auf die Patenterteilung: **19.11.2003**
(21) Anmeldenummer: 00989846.1
(22) Anmeldetag: 09.12.2000
(51) Int. Cl.: B01F 7/00

(54) **VORRICHTUNG ZUM MISCHEN VON VISKOSEN FLÜSSIGKEITEN**
DEVICE FOR MIXING VISCOUS LIQUIDS
DISPOSITIF PERMETTANT DE MELANGER DES LIQUIDES VISQUEUX

(30) Priorität: 14.12.1999 DE 19960202
(43) Veröffentlichungstag der Anmeldung: 11.09.2002
(73) Patentinhaber: Herbak, Zsolt, 75323 Bad Wildbad-Calmbach (DE)
(72) Erfinder: Herbak, Zsolt, 75323 Bad Wildbad-Calmbach (DE)
(74) Vertreter: Frank, Gerhard, Dipl.-Phys.
(86) Internationale Anmeldenummer: DE0004386
(87) Internationale Veröffentlichungsnummer: WO01043858

(56) Entgegenhaltungen:
- DE-A- 3 117 014
- US-A- 3 865 353
- US-A- 4 503 014
- US-A- 4 883 645
- US-A- 5 445 781
- US-A- 5 785 422

## Beschreibung

### Technisches Gebiet

Die Erfindung betrifft eine Vorrichtung zum Mischen von viskosen Flüssigkeiten gemäß dem Oberbegriff des Anspruchs 1 und ein Verfahren zur Anwendung einer solchen Vorrichtung.

### Stand der Technik

Gattungsgemäße Vorrichtungen sind in der Technik bekannt, sie werden beispielsweise in der Kunststoff-Industrie benutzt, wenn zwei Komponenten vermischt werden sollen, welche dann reagieren und dadurch das Endprodukt, beispielsweise ein Kunststoffschaum, gebildet wird. Grundsätzlich sind hier zwei verschiedenartige Vorrichtungen bekannt:

Zum Mischen von hochviskosen Flüssigkeiten werden diese aus je zwei Düsen in einen meist zylindrischen Reaktionsraum eingebracht und dann unter Einsatz von Rührwerkzeugen miteinander vermischt. Die möglichst homogen vermischten Flüssigkeiten treten dann an einem unten offenen Ende aus dem Reaktionsraum aus. Diese Vorrichtungen sind nur für den kontinuierlichen Betrieb geeignet, da die beiden Flüssigkeiten häufig recht schnell miteinander reagieren und bei einer Produktionsunterbrechung das Rührwerk verkleben. Sobald das Gemisch einmal ausgehärtet und erstarrt ist, kann der Reaktionsraum nur noch unter großem Aufwand oder überhaupt nicht mehr gereinigt und somit wieder funktionstüchtig gemacht werden.

Es ist weiterhin bekannt, die beiden viskosen Flüssigkeiten mittels zweier Hochdruckpumpen in einen zumeist zylindrischen Reaktionsraum einzuspritzen, wobei sich die Strahlen im Gegenstrom-Injektionsverfahren durchmischen. Bei diesen Vorrichtungen sind zumeist Kolben vorgesehen, durch deren axialen Hub der Kolben von den bei Produktionsstillständen im Mischraum verbleibenden Flüssigkeiten gereinigt werden kann. Diese Anordnungen haben den Vorteil, dass sie auch zum diskontinuierlichen Betrieb eingesetzt werden können, allerdings ist aufgrund der fehlenden Rührwerkzeuge ein Einsatz für hochviskose Flüssigkeiten nicht möglich.

Aus der gattungsbildenden DE 31 17 014 A1 ist eine Mischvorrichtung mit einem Steuerkolben bekannt, die nach dem Gegenstromprinzip arbeitet und weiterhin über ein Rührwerk verfügt, das in die Mischkammer eingefahren werden kann. Diese Vorrichtung kann auch im diskontinuierlichen Betrieb eingesetzt werden. In einem Ausführungsbeispiel ist am Steuerkolben eine drehbare Abschlussplatte angeordnet, die von einem Rührelement durchsetzt wird.

Mit dieser Vorrichtung kann zwar grundsätzlich ein gutes Mischergebnis erzielt werden, da Gegenstrom- und Rührprinzip kombiniert werden. Aufgrund der hohen Adhäsions- und Scherkräfte, die bei beim Mischen hochviskoser Substanzen insbesondere dann auftreten, wenn diese unter kurzen Reaktionszeiten einen festen Kunststoff oder Kunststoffschaum bilden, ist die dort vorgeschlagene Konstruktion jedoch nur schwierig für industrielle Anwendungen mit den geforderten langen Standzeiten bei entsprechender Betriebssicherheit umsetzbar.

### Zusammenfassung der Erfindung

Ausgehend von diesem Stand der Technik ist es Aufgabe der Erfindung, die gattungsgemäße Vorrichtung zum Mischen von Flüssigkeiten dahingehend zu verbessern, dass sie auch für hochviskose Flüssigkeiten geeignet ist und hierbei lange Standzeiten und eine gute Betriebssicherheit erreichbar ist. Insbesondere soll diese Vorrichtung dazu geeignet sein, hochviskose Flüssigkeiten zu mischen, die miteinander unter kurzen Reaktionszeiten einen festen Kunststoff oder Kunststoffschaum bilden. Diese Aufgabe wird mit einer Vorrichtung mit den Merkmalen des Anspruchs 1 gelöst.

Eine bestimmungsgemäße Anwendung einer solchen Vorrichtung erfolgt gemäß Anspruch 9.

Grundgedanke der Erfindung ist es, die gattungsbildende Vorrichtung dahingehend weiterzubilden, dass der gesamte zu Reinigungszwecken axial verschiebbare Kolben in der zylindrischen Mischkammer um die eigene Achse rotiert werden kann, wodurch eine Rührbewegung erzeugt wird. Der Steuerkolben hat also eine Doppelfunktion, nämlich als Reinigungselement und als Rührelement. Dadurch kann die gesamte Vorrichtung mechanisch einfacher und stabiler ausgeführt werden.

Weitere vorteilhafte Ausgestaltungen ergeben sich aus den anderen Unteransprüchen.

### Kurzbeschreibung der Erfindung

Die Erfindung wird nun mit bezug auf die Figuren an einem Beispiel detailliert erläutert:
- Figur 1: zeigt eine erfindungsgemäße Vorrichtung im Längsschnitt in einer ersten Arbeitspositiion,
- Figur 2: zeigt die Vorrichtung aus Figur 1 in einer zweiten Arbeitsposition,
- Figur 3: zeigt den Querschnitt durch die Mischkammer,
- Figuren 4A und B: zeigen schematisch eine Weiterbildung der Erfindung,
- Figur 5: zeigt schematisch ein weiteres Ausführungsbeispiel.

### Ausführliche Beschreibunct bevorzugter Ausführungsformen

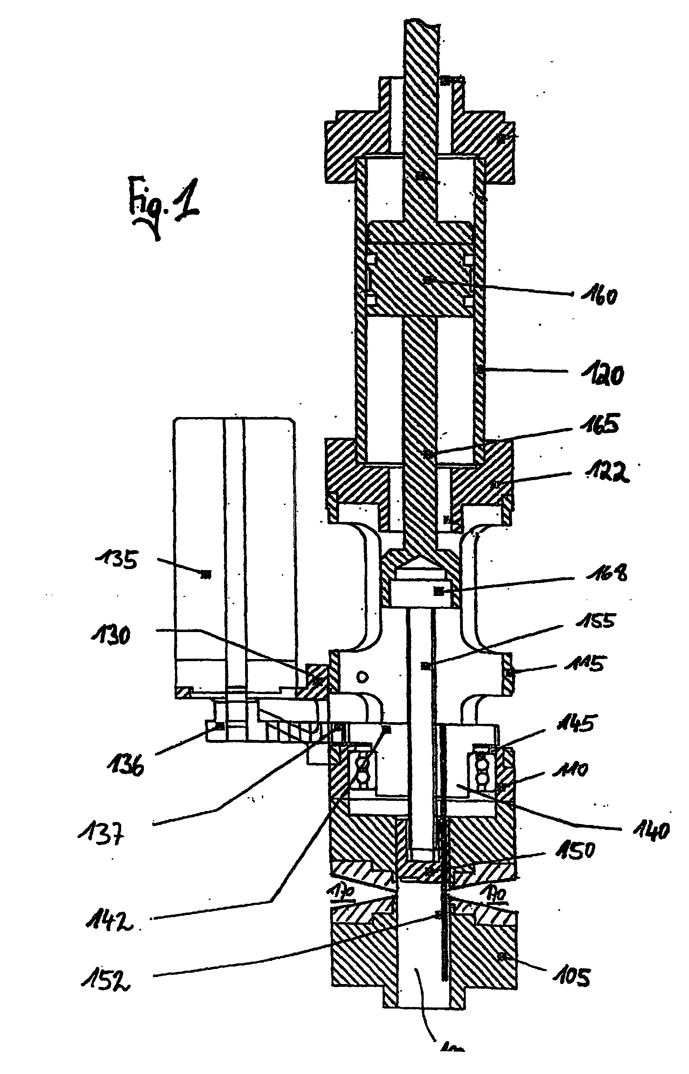

In Figur 1 ist eine erfindungsgemäße Vorrichtung im Querschnitt dargestellt. Das Mischkammergehäuse 105 weist eine zylindrische Mischkammer 100 auf, in der der Kolben 150 axial verschieblich gelagert ist. Die axiale Verschiebung des Kolbens 150 wird mittels des im Hydraulikzylinder 120 gelagerten Hydraulikkolbens 160 bewirkt. Der Hydraulikkolben 160 ist starr mit der Hydraulikstange 165 gekoppelt, welche an ihrem unteren Ende das erste Kugellager 168 trägt. Am inneren Kranz des Kugellagers 168 ist die Keilwelle 155 gehalten, so dass Hydraulikstange 165 und Keilwelle 155 axial gekoppelt, jedoch bezüglich der Rotation um die Achse A-A entkoppelt sind. Die Keilwelle 155 durchstößt das Kopplungselement 140, wodurch Kopplungselement 140 und Keilwelle 155 in ihrer Rotationsbewegung gekoppelt sind. Am Ende der Keilwelle 155 ist der in der Mischkammer 100 angeordnete Kolben 150 befestigt.

Das oben erwähnte Kopplungselement 140 ist mittels des zweiten Kugellagers 145 mit dem Lagerflansch 110 verbunden, welcher wiederum starr am Mischkammergehäuse 105 angeflanscht ist. Das Kopplungselement 140, welches im wesentlichen symmetrisch bezüglich der Achse A-A aufgebaut ist, trägt an seiner Außenseite den Zahnkranz 142. Der Zahnkranz 142 und somit auch das Kopplungselement 140 ist mit dem Motor 135 antreibbar. Dazu ist auf der Motorachse des Motors 135 das Zahnrad 136 angebracht, welches wiederum mittels des Zahnriemens 137 mit dem Zahnkranz 142 in Verbindung steht. Der Motor 135 ist über die Konsole 130 an der Laterne 115 bzw. am Lagerflansch 110 angeflanscht.

Am Kopplungselement 140 ist der Rührstab 152 angeordnet, welcher sich parallel zur Achse A-A in die Mischkammer 100 erstreckt, wobei er den Kolben 150 durchstößt.

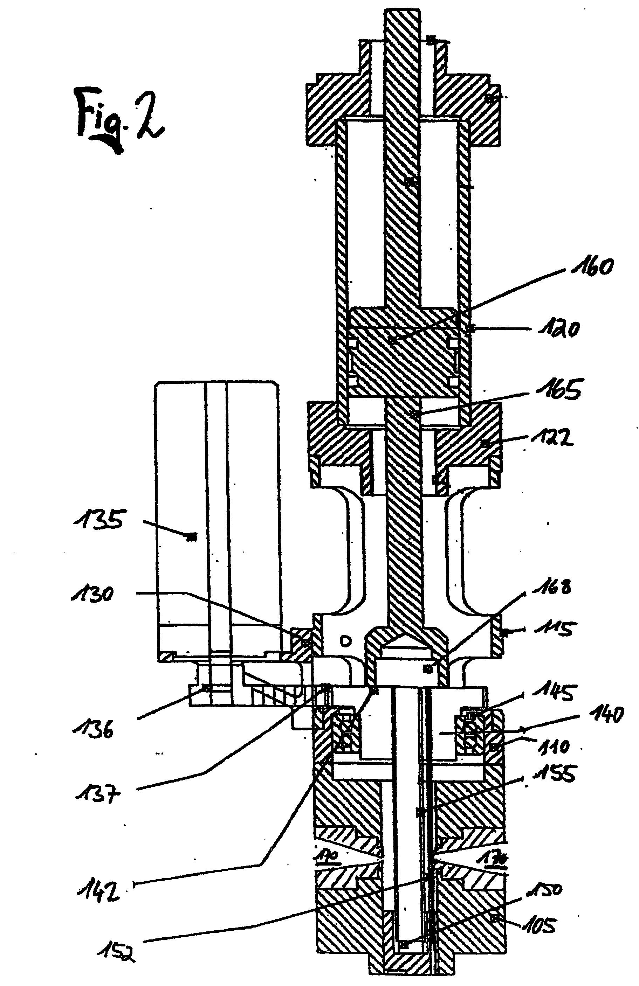

Im Mischkammergehäuse 105 sind die beiden Düsen 170 angeordnet, durch welche die beiden zu mischenden viskosen Flüssigkeiten in die Mischkammer 100 gepresst werden. Die beiden Düsen 170 sind in den Figuren 1 und 2 nur schematisch dargestellt.

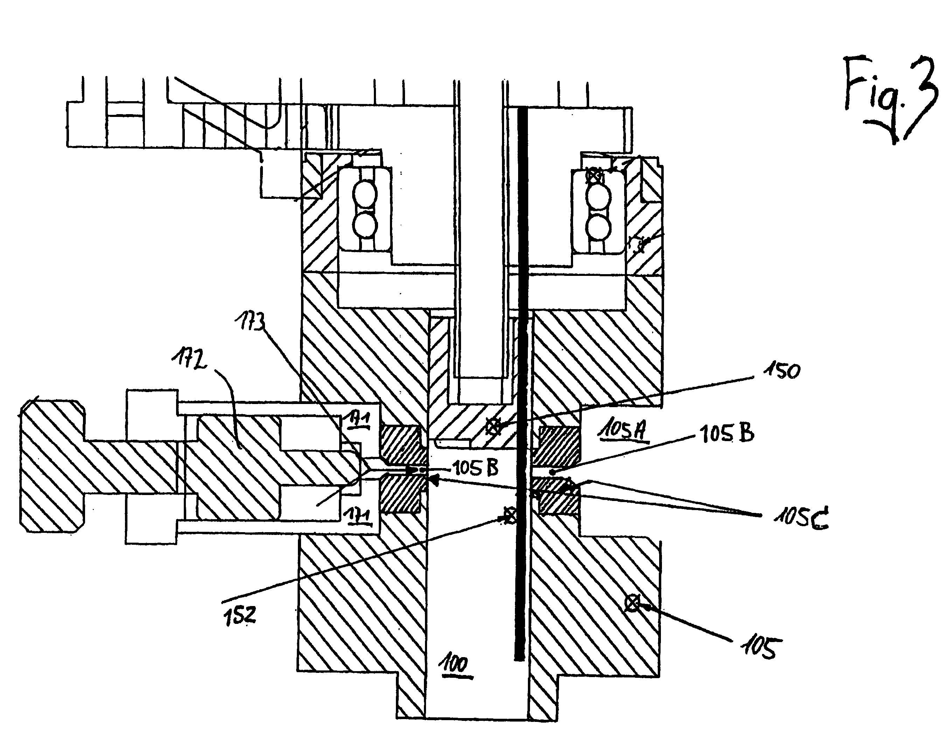

In Fig. 3 ist dargestellt, wie die Düsen 170 aufgebaut sein können. Das Mischkammer-Gehäuse 105 weist zwei Ausnehmungen 105 A auf, in die jeweils ein Düsenkörper 171 eingesetzt ist (dargestellt ist hier jedoch nur ein Düsenkörper 171). Innerhalb des Düsenkörpers 171 wird der Hochdruck, welcher extern aufgebaut wird, mittels eines Einspritzkolbens 172 geregelt und die Flüssigkeit durch die Düsenkörperöffnung 173 aus dem Düsenkörper 172 herausgedrückt. Solche Anordnungen sind in der Technik bekannt und sollen hier nicht weiter beschrieben werden. Die eigentlichen Düsenöffnungen sind hier die Austrittsbohrungen 105 B von gehärteten Düsenspitzen 105 C im Mischkammer-Gehäuse 105. Es wäre auch denkbar die Düsenkörper bis an die Mischkammer heranzuführen, so dass die Vorderfront des Düsenkörpers Teil der Seitenwandung der Mischkammer wird. In diesem Fall wären Düsenkörperöffnung und Austrittsbohrung der Düsenspitzen identisch.

### Die prinzipielle Arbeitsweise der Vorrichtung wird nun beschrieben:

In Figur 1 ist die erste Arbeitsstellung der Vorrichtung gezeigt. Hierbei befindet sich der Kolben 150 oberhalb der Düsenöffnungen der Düsen 170. In dieser Stellung werden die zu mischenden Flüssigkeiten durch die Düsen 170 in die Mischkammer 100 eingespritzt. Das Einspritzen geschieht normalerweise unter Hochdruck, d.h. mit Einspritzdrücken über 100 bar. Während des Einspritzvorgangs wird das Kopplungselement 140 mittels des Motors 135 und somit auch der Kolben 150 und der Rührstab 152 in Rotation versetzt. Durch die Rotation des Kolbens 150 und des Rührstabs 152 können auch hochviskose Flüssigkeiten miteinander vermischt werden. Die durchmischten Flüssigkeiten treten am unteren Ende der Mischkammer 100 nach außen aus.

Nach Beendigung des Mischvorgangs wird die Zufuhr der beiden Flüssigkeiten durch die Düsen 170 abgestellt, anschließend wird mittels Druckbeaufschlagung des Hydraulikkolbens 160 der Kolben 150 axial in der Mischkammer 100 nach unten geschoben (siehe Figur 2). Dadurch werden die verbliebenen Reste aus der Mischkammer 100 ausgeschoben und somit die Mischkammer 100 gereinigt. Gleichzeitig erfolgt auch ein Abstreifen und somit Säubern des Rührstabes 152. Soll die Produktion nun

wieder aufgenommen werden, wird der Kolben 150 wieder in die in Figur 1 gezeigte Position zurückgezogen und der Zyklus kann von neuem beginnen.

Im folgenden werden noch einige Variationsmöglichkeiten der erfindungsgemäßen Vorrichtung dargestellt:

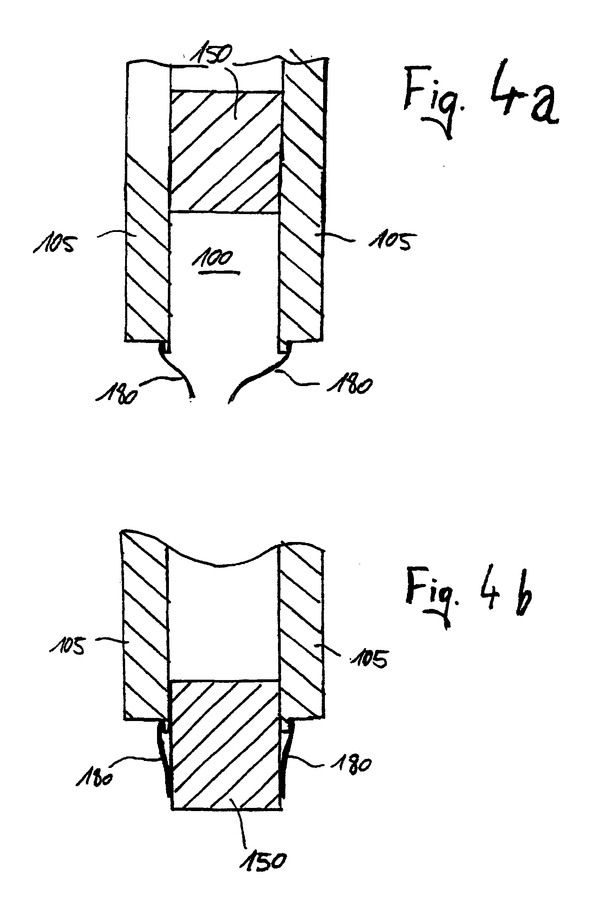

Gemäß den Figuren 4A und B kann am offenen Ende der Mischkammer 100, also dort wo das fertige Gemisch aus der Mischkammer austritt, eine flexible Tülle 180 angebracht sein. Die Tülle 180 ist dabei vorzugsweise so ausgebildet, dass sie sich im unbelasteten Zustand nach unten hin verjüngt, insbesondere einen länglichen Öffnungsschlitz bildet. Dies kann von Vorteil sein, wenn die durchmischte Masse in einer kontrollierten Art und Weise abgegeben werden soll. In diesem Fall muss der axiale Hub des Kolbens 150 so groß sein, dass er auch die Tülle 180 in ihrer gesamten Länge durchstoßen kann. Durch die flexiblen Eigenschaften der Tülle 180 passt sie sich beim Durchschieben des Kolbens 150 dessen Form an, so dass auch der Innenraum der Tülle 180 durch den Axialhub des Kolbens 150 gereinigt werden kann (siehe Figur 4B).

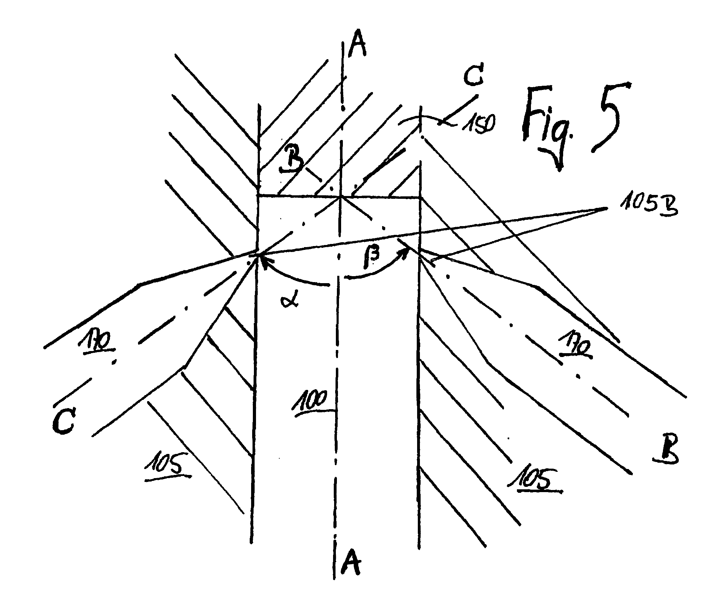

Gemäß Figur 5 ist es auch denkbar, die Austrittsbohrung 105 B der Düsenspitzen schräg bezüglich der Längsachse A-A der Mischkammer anzuordnen, derart, dass sich die Längsachsen B-B und C-C der Austrittsbohrungen der Düsenspitzen in etwa auf der Oberfläche des Kolbens 150 schneiden, wenn dieser in der Arbeitsposition "Mischen" steht. Dies kann insbesondere dann zu einem verbesserten Mischergebnis führen, wenn der Kolben 150 eine strukturierte Oberfläche, beispielsweise mit Nuten oder Rillen aufweist. Insbesondere in diesem Fall ist es auch denkbar, ohne einen Rührstab zu arbeiten. Es ist natürlich auch denkbar, die gewinkelte Düsenposition mit dem Einsatz eines Rührstabes gemäß den Figuren 1 und 2 zu kombinieren.

Da zwischen Mischkammergehäuse und Kolben und zwischen Kolben und Rührstab möglichst große Dichtigkeit bei möglichst kleiner Reibung herrschen sollte, wird vorgeschlagen, zumindest jeweils eine der sich gegenüberliegenden Oberflächen mit einer diamantartigen Graphit-Oberfläche zu überziehen. Es sind jedoch auch andere Oberflächengestaltungen denkbar, wobei natürlich möglichst reibungs- und verschleißarmen Materialkombinationen der Vorzug zu geben ist. Es ist auch denkbar, den Kolben 150 mit Ausnehmungen, beispielsweise Umfangsnuten, zu versehen und in diesen Ausnehmungen Schmierstoffe einzulagern.

Es ist weiterhin denkbar, mehrere Rührstäbe einzusetzen, wobei diese Rührstäbe jedoch stets parallel zur Achse A-A angeordnet sein müssen.

In Erweiterung der oben beschriebenen Arbeitsweise ist es weiterhin denkbar, dass der Kolben 150 auch während der Mischphase kurze Axialhübe ausführt, wodurch oszillierende Druckimpulse auf die in der Mischkammer 100 befindlichen Stoffe ausgeübt werden. Eine solche Axialschwingung kann beispielsweise mittels des schon beschriebenen Hydraulikkolbens 160 bewirkt werden, es ist jedoch auch denkbar, ein weiteres kurzhubiges Pneumatik- oder Hydraulikelement seriell zur Hydraulikstange 165 anzuordnen.

Es ist weiterhin auch denkbar, mehr als zwei Düsen im Mischkammergehäuse 105 anzuordnen.

## Patentansprüche

1. Vorrichtung zum Mischen von viskosen Flüssigkeiten mit:
- einer an einer Stirnseite offenen zylindrischen Mischkammer (100) mit einer Seitenwandung,
- wenigstens zwei Einspritzdüsen (170), deren Düsenöffnungen Austrittsbohrungen (105B) in der Seitenwandung sind,
- einem in der Mischkammer (100) axial längs der Längsachse (A-A) der Mischkammer (100) verschiebbaren Kolben (150) mit einer kreisförmigen Oberfläche und einer sich hieran anschließenden, an der Seitenwandung anliegenden Mantelfläche, wobei die kreisförmige Oberfläche um die Längsachse (A-A) mittels eines Motors (135) drehbar ist,
**dadurch gekennzeichnet, dass** der gesamte Kolben um die Längsachse (A-A) der Mischkammer (100) drehbar ist.

2. Vorrichtung nach Anspruch 1, **dadurch gekennzeichnet, dass** der Kolben (150) wenigstens eine Durchbrechung aufweist, durch die ein Rührstab (152) ragt, wobei Kolben (150) und Rührstab (152) axial entkoppelt oder entkoppelbar sind.

3. Vorrichtung nach Anspruch 1 oder 2, **dadurch gekennzeichnet, dass** die Achsen (B-B, C-C) der Austrittsbohrungen (105 B) mit der Längsachse (A-A) der Mischkammer (100) jeweils einen zur offenen Stirnseite hin offenen Winkel einschließen.

4. Vorrichtung nach einem der vorangehenden Ansprüche, **dadurch gekennzeichnet, dass** die Oberfläche des Kolbens (150) wenigstens eine Nut aufweist.

5. Vorrichtung nach einem der vorangehenden Ansprüche, **dadurch gekennzeichnet, dass** der Kolben (150) Hinterschneidungen aufweist, in denen vorzugsweise zumindest teilweise Schmierstoffe eingelagert sind.

6. Vorrichtung nach einem der vorangehenden Ansprüche, **dadurch gekennzeichnet, dass** der Kolben (150) eine erste Position hat, bei der der Kolben die Düsenöffnungen nicht berührt, und dass der Kolben (150) eine weitere Position hat, bei der der Kolben die Düsenöffnungen nicht berührt, und dass Antriebsmittel vorgesehen sind, mittels derer eine Oszillationsbewegung des Kolbens (150) zwischen den beiden Positionen bei gleichzeitiger Rotation des Kolbens bewirkt werden kann.

7. Vorrichtung nach Anspruch 3 und Anspruch 6, **dadurch gekennzeichnet, dass** sich die Achsen (B-B, C-C) der Austrittsbohrungen (105B) in etwa auf der Oberfläche schneiden, wenn sich der Kolben (150) in der ersten oder zweiten Position befindet.

8. Vorrichtung nach Anspruch 2, **dadurch gekennzeichnet, dass** der Rührstab (152) in axialer Richtung zumindest mittelbar mit der Seitenwandung gekoppelt ist.

9. Vorrichtung nach einem der vorangehenden Ansprüche, **dadurch gekennzeichnet, dass** an der Öffnung der Mischkammer (100) das erste Ende einer Tülle (180) aus einem flexiblen Material angeordnet ist, welche vorzugsweise zu ihrem zweiten Ende hin flach ausläuft.

10. Vorrichtung nach einem der vorangehenden Ansprüche, **dadurch gekennzeichnet, dass** der Kolben und/oder die Seitenwandung zumindest teilweise eine Kohlenstoffbeschichtung aufweisen.

11. Verfahren zum Mischen von wenigstens zwei viskosen Flüssigkeiten unter Verwendung einer Vorrichtung mit den Merkmalen des Anspruchs 1 mit folgenden Schritten:
a) Positionieren des Kolbens in einer ersten Position, wobei der Kolben die Düsenöffnungen nicht blockiert,
b) Einspritzen der Flüssigkeiten bei gleichzeitiger Drehung des Kolbens,
c) Beendigen des Einspritzvorgangs,
d) axiales Verschieben des Kolbens zum Auswerfen des noch in der Mischkammer befindlichen Materials, wobei der Kolben vorzugsweise so weit bewegt wird, dass die Kreisfläche die Mischkammer verlässt

12. Verfahren nach Anspruch 11, **dadurch gekennzeichnet, dass** während des Schrittes b) der Kolben zwischen der ersten Position und einer zweiten Position, bei der der Kolben die Düsenöffnungen ebenfalls nicht blockiert, oszilliert.

13. Verfahren nach einem der Ansprüche 11 oder 12, **dadurch gekennzeichnet, dass** die Flüssigkeiten mit Drücken von mehr als 100 bar eingespritzt werden.

## Claims

1. Device for mixing viscous liquids, comprising:
- a cylindrical mixing chamber (100) which is open at one end face and has a side wall,
- at least two injection nozzles (170), the nozzle openings of which are exit bores (105B) in the side wall,
- a piston which is axially displaceable in the mixing chamber (100) along the longitudinal axis (A-A) of the mixing chamber (100) and which has a circular surface and an adjoining lateral area which abuts against the side wall, the circular surface being rotatable about the longitudinal axis (A-A) by means of a motor (135),
**characterised in that** the entire piston is rotatable about the longitudinal axis (A-A) of the mixing chamber (100).

2. Device according to claim 1, **characterised in that** the piston (150) has at least one opening through which a stirring rod (152) protrudes, the piston (150) and the stirring rod (152) being axially uncoupled or capable of being uncoupled.

3. Device according to claim 1 or 2, **characterised in that** the axes (B-B, C-C) of the exit bores (105B) in each case enclose with the longitudinal axis (A-A) of the mixing chamber (100) an angle which is open towards the open end face.

4. Device according to one of the preceding claims, **characterised in that** the surface of the piston (150) has at least one groove.

5. Device according to one of the preceding claims, **characterised in that** the piston (150) has undercuts which are at least partially filled with lubricants.

6. Device according to one of the preceding claims, **characterised in that** the piston (150) has a first position in which the piston does not come into contact with the nozzle openings, and **in that** the piston (150) has another position in which the piston does not come into contact with the nozzle openings, and **in that** drive means are provided, by means of which an oscillating movement of the piston (150) between the two positions can be produced, with simultaneous rotation of the piston.

7. Device according to claim 3 and claim 6, **characterised in that** the axes (B-B, C-C) of the exit bores (105B) approximately intersect on the surface when the piston (150) is in the first or second position.

8. Device according to claim 2, **characterised in that** the stirring rod (152) is coupled in an axial direction at least indirectly to the side wall.

9. Device according to one of the preceding claims, **characterised in that** at the opening of the mixing chamber (100) is disposed the first end of a mouthpiece (180) which is formed from a flexible material and preferably flattens out towards its second end.

10. Device according to one of the preceding claims, **characterised in that** the piston and/or the side wall have a carbon coating at least in parts.

11. Method for mixing at least two viscous liquids using a device having the features of claim 1, said method having the following steps:
a) positioning the piston in a first position in which the piston does not block the nozzle openings,
b) injecting the liquids with simultaneous rotation of the piston,
c) ending the injection process,
d) axial displacement of the piston to eject the material still in the mixing chamber, the piston preferably being so far moved that the circular area leaves the mixing chamber.

12. Method according to claim 11, **characterised in that** during step b) the piston oscillates between the first position and a second position in which the piston also does not block the nozzle openings.

13. Method according to one of claims 11 or 12, **characterised in that** the liquids are injected under pressures of more than 100 bar.

## Revendications

1. Dispositif permettant de mélanger des liquides visqueux comportant :
- une chambre de mélange (100) cylindrique ouverte sur une face frontale, présentant une paroi latérale,
- au moins deux injecteurs (170), dont les orifices d'injection sont des perçages de sortie (105B) dans la paroi latérale,
- un piston (150) capable de translation dans la chambre de mélange (100) axialement le long de l'axe longitudinal (A-A) de la chambre de mélange (100), présentant une surface de forme circulaire et, y faisant suite, une surface enveloppante contiguë à la paroi latérale, la surface de forme circulaire étant capable de rotation autour de l'axe longitudinal (A-A) au moyen d'un moteur (135),
**caractérisé en ce que** le piston complet est capable de rotation autour de l'axe longitudinal (A-A) de la chambre de mélange (100).

2. Dispositif selon la revendication 1, **caractérisé en ce que** le piston (150) présente au moins un passage par lequel pénètre une tige d'agitation (152), le piston (150) et la tige d'agitation (152) étant ou pouvant être découplés axialement.

3. Dispositif selon la revendication 1 ou 2, **caractérisé en ce que** les axes (B-B, C-C) des orifices de sortie (105B) forment chacun avec l'axe longitudinal (A-A) de la chambre de mélange (100) un angle ouvert vers la face frontale ouverte.

4. Dispositif selon l'une des revendications précédentes, **caractérisé en ce que** la surface du piston (150) présente au moins une rainure.

5. Dispositif selon l'une des revendications précédentes, **caractérisé en ce que** le piston (150) présente des découpes, dans lesquelles sont de préférence stockés au moins partiellement des lubrifiants.

6. Dispositif selon l'une des revendications précédentes, **caractérisé en ce que** le piston (150) a une première position dans laquelle le piston ne touche pas les orifices d'injection, et que le piston (150) a une autre position dans laquelle le piston ne touche pas les orifices d'injection, et que des moyens d'entraînement sont prévus au moyen desquels un mouvement oscillant du piston (150) peut être effectué entre les deux positions avec rotation simultanée du piston.

7. Dispositif selon la revendication 3 et la revendication 6, **caractérisé en ce que** les axes (B-B, C-C) des orifices de sortie (105B) se coupent sensiblement sur la surface lorsque le piston (150) se trouve dans la première ou la seconde position.

8. Dispositif selon la revendication 2, **caractérisé en ce que**, dans la direction axiale, la tige d'agitation (152) est couplée au moins indirectement avec la paroi latérale.

9. Dispositif selon l'une des revendications précédentes, **caractérisé en ce qu'**à l'ouverture de la chambre de mélange (100) est disposée la première extrémité d'une douille (180) en un matériau flexible, laquelle de préférence s'aplatit en direction de sa seconde extrémité.

10. Dispositif selon l'une des revendications précédentes, **caractérisé en ce que** le piston et/ou la paroi latérale présentent au moins partiellement une couche de revêtement en carbone.

11. Procédé pour mélanger au moins deux liquides visqueux en utilisant un dispositif présentant les caractéristiques de la revendication 1, comportant les étapes suivantes :
a) positionnement du piston dans une première position dans laquelle le piston ne bloque pas les orifices d'injection,
b) injection des liquides avec rotation simultanée du piston,
c) achèvement de l'opération d'injection,
d) déplacement axial du piston pour l'éjection du produit se trouvant encore dans la chambre de mélange, le piston étant de préférence déplacé jusqu'à ce que la surface circulaire quitte la chambre de mélange.

12. Procédé selon la revendication 11, **caractérisé en ce que** pendant l'étape b) le piston oscille entre la première position et une seconde position dans laquelle le piston ne bloque pas non plus les orifices d'injection.

13. Procédé selon l'une des revendications 11 ou 12, **caractérisé en ce que** les liquides sont injectés à des pressions de plus de 100 bar.
